# EUROPÄISCHE PATENTSCHRIFT

(11) **EP 0 762 175 B1**
(45) Veröffentlichungstag und Bekanntmachung des Hinweises auf die Patenterteilung: **10.09.2003**
(21) Anmeldenummer: 96111572.2
(22) Anmeldetag: 18.07.1996
(51) Int. Cl.: G02B 21/24

(54) **Einrichtung zur Fokusstabilisierung in einem Mikroskop**
Apparatus for stabilising the focus of a microscope
Dispositif pour stabiliser le mise au point d'un microscope

(30) Priorität: 16.08.1995 DE 19530136
(43) Veröffentlichungstag der Anmeldung: 12.03.1997
(73) Patentinhaber: Leica Microsystems Wetzlar GmbH, 35578 Wetzlar (DE)
(72) Erfinder: Gaul, Norbert, 35606 Solms (DE)

(56) Entgegenhaltungen:
- DE-A- 3 520 475
- DE-A- 4 232 079
- US-A- 4 703 181
- US-A- 4 841 148
- PATENT ABSTRACTS OF JAPAN vol. 095, no. 006, 31.Juli 1995 & JP 07 055512 A (MITAKA KOKI CO LTD), 3.März 1995,

## Beschreibung

Die Erfindung betrifft ein Mikroskop mit einem Objektiv gemäß dem Oberbegriff des Patentanspruchs 1.

Bekannte Mikroskope sind in der Regel mit einem Objektivrevolver ausgestattet, der eine Mehrzahl von unterschiedlichen Objektiven aufnimmt. Durch Drehen am Revolver wird das gewünschte Objektiv in den Strahlengang des Mikroskops eingeschwenkt. Die Fokussierung des Objektivs erfolgt durch eine Bewegung des Objekttisches entlang der optischen Achse des Mikroskopobjektivs. Dazu ist am Objekttisch eine Zahnstange fest angeordnet, die auf einem Antriebszahnrad kämmt. Dieses Antriebszahnrad ist über weitere getriebliche Mittel mit den außerhalb am Mikroskopkörper vorgesehenen Bedienknöpfen verbunden. Zusätzlich oder wahlweise kann das Antriebszahnrad auch mit einem motorischen Antrieb verbunden sein.

In bekannten Mikroskopen sind ferner elektronische Bauteile zur Steuerung von diversen automatischen bzw. motorischen Mikroskopfunktionen sowie eine Schaltung zur Strom/Spannungversorgung der Lichtquelle integriert.

Bedingt durch die Lichtquelle und die integrierten elektronischen Bauteile wird der Mikroskopkörper während des Betriebes erwärmt.

In der Praxis hat es sich gezeigt, daß sich der Mikroskopkörper bei einer Erwärmung ausdehnt. Aus dieser Ausdehnung und dem äußerst geringen Tiefenschärfebereich der Mikroskopobjektive (im µ Bereich) resultiert der unerwünschte Effekt, daß eine Veränderung des Abstandes zwischen dem Objekttisch mit dem Präparat und dem Mikroskopobjektiv stattfindet und somit die einmal eingestellte Fokusposition verlorengeht.

Ein Mikroskop mit integrierten elektrischen und elektronischen Bauteilen ist aus der DE 35 20 475 bekannt. Die Erwärmung des Mikroskopkörpers wird bei diesem Mikroskop dadurch vermieden, daß im Mikroskopstativfuß thermisch isolierte Kammern zur Aufnahme aller elektrischen und elektronischen Bauteile vorgesehen sind und die hier erzeugte Wärme über in der Bodenplatte vorhandene Lüftungsschlitze abgeleitet wird.

Aus der DE 25 58 625 A1 ist eine Bohr- bzw. Fräsmaschine mit einer thermischen Kompensationseinrichtung und einem Meßfühler bekannt. Dem am Ausleger der Maschine angeordneten Spindellager ist zur Kompensation von strahlungsbedingter Aufheizung ein Eisenstab und ein parallel dazu angeordneter Aluminiumstab zugeordnet, der dem Eisenstab hinsichtlich der Wärmeausdehnung entgegengesetzt arbeitet. Am einem Ende trägt der Eisenstab einen elektrisch arbeitenden Meßfühler, der zusätzlich mit dem Ausleger verbunden ist.

Thermisch bedingte Wärmeausdehnungen des Auslegers und die damit verbundene Dejustierung des Werkzeuges in X-Y-Richtung werden über den Meßfühler erfaßt, wobei eine derartige Anordnung einen festen Abstand zwischen dem Befestigungspunkten der Stäbe am Maschinengehäuse und der Befestigung des Meßfühlers an der Spindel voraussetzen.

Die von dem Meßfühler erzeugten Meßwerte werden zur Kompensation in einen elektronisch gesteuerten Antrieb des Tisches mit der Werkstückaufspannung eingegeben. Zweckmäßigerweise soll damit die Null-Stellung des Tisches in Abhängigkeit von der Wärmedehnung des Gehäuses verändert werden.

Die DE 42 32 079 A1 beschreibt einen piezoelektrischen Translator für den Objektisch eines konfokalen Mikroskops, der den Objekttisch zentral und spielfrei bewegt. Über den piezoelektrischen Translator wird ein radiales Auswandern des Tisches infolge einer thermischen Drift weitgehend ausgeschlossen.

Aus der JP 07-055 512 A ist eine Halteeinrichtung mit einem ersten Arm für ein Messinstrument bekannt. Der Arm ist fest mit einem Sockel verbunden. Durch den Einfluss von Wärme dehnt sich der Arm aus. Dadurch wird das an der Halteeinrichtung befestigte Messinstrument entlang der z-Achse unkontrolliert bewegt und es ändert sich der Abstand zwischen dem Messinstrument und dem Sockel. Zur Kompensation dieser Bewegung ist zwischen dem ersten Arm und der Halteeinrichtung ein zusätzlicher Arm angeordnet. Beide Arme sind miteinander über einen Pin verbunden und weisen unterschiedliche WärmeAusdehnungskoeffizienten auf. Bei steigender Temperatur bewegt sich der Arm nach oben und gleichzeitig der Arm in entgegengesetzter Richtung. Dadurch wird die Lage Halteeinrichtung konstant gehalten. Eine Wärmeausdehnung des Messinstruments selbst, wird jedoch nicht kompensiert.

Es ist daher Aufgabe der vorliegenden Erfindung, eine durch die Wärmeausdehnung des Mikroskopkörpers bedingte Defokussierung in Z-Richtung ohne zusätzliche, elektronisch gesteuerte Stellglieder zu kompensieren.

Diese Aufgabe wird erfindungsgemäß durch die im kennzeichnenden Teil des Patentanspruches 1 angegebenen Merkmale gelöst. Weitere vorteilhafte Weiterbildungen der Erfindung sind Gegenstand der Unteransprüche.

Mit der Erfindung wird erreicht, daß der generelle Aufbau eines bekannten Mikroskops erhalten bleibt und dabei lediglich durch die beiden an einem Ende miteinander verbundenen Stäbe mit unterschiedlicher Wärmeausdehnung, eine Defokussierung einer einmal eingestellten Fokusposition bzw. einer vorgegebenen, definierten Fokusposition ausgeschlossen wird.

Dabei verhält sich die Einrichtung dynamisch, d.h. mit zunehmender Temperatur im Mikroskop bzw. Mikroskopstativ und der damit verbundenen zunehmenden Defokussierung, wird über die beiden Stäbe der entsprechende Defokussierungsbetrag kompensiert. Über einen großen Temperaturbereich bleibt der eingestellte Fokus erhalten.

Die beiden Stäbe sind dabei aus Materialien mit unterschiedlichen Wärmeausdehnungskoeffizienten gefertigt.

Zur genauen Anpassung an die thermischen Verhältnisse im Mikroskopstativ können die beiden Stäbe auch unterschiedlich lang dimensioniert sein.

Die Erfindung wird anhand eines Ausführungsbeispiels mit Hilfe der schematischen Zeichnung näher erläutert.

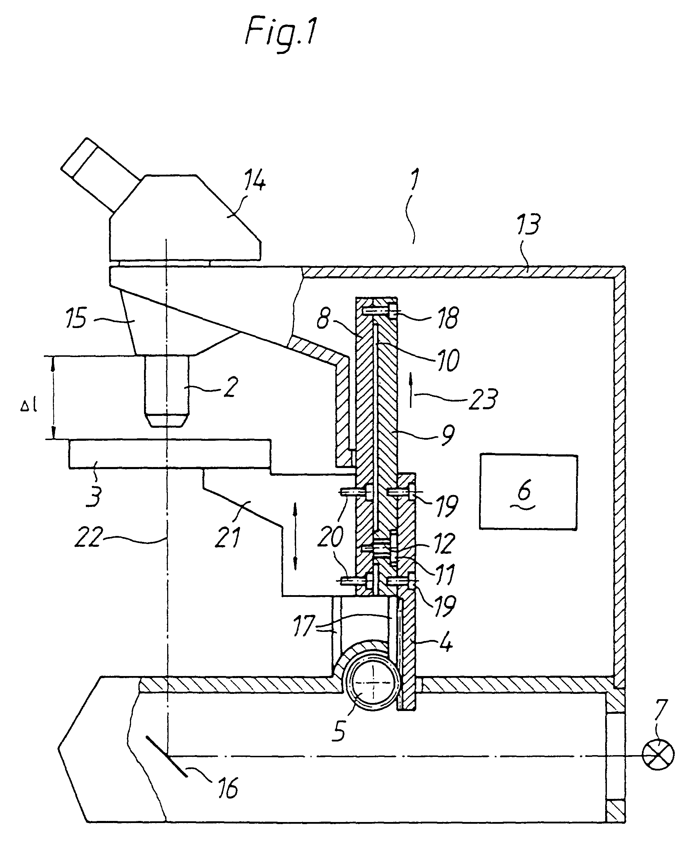

Die Zeichnung zeigt ein Mikroskop 1 mit einem Mikroskopkörper 13, einem Binotubus 14, einem Objektivrevolver 15 mit einem im Wirkstellung befindlichen Mikroskopobjektiv 2. Unterhalb des Objektivs 2 ist ein Objekttisch 3 zur Aufnahme eines Präparates in der Objektivachse 22 angeordnet. Das Präparat wird über eine Beleuchtungseinrichtung 7, die hier als externe Einrichtung angedeutet ist, durchleuchtet. Dazu ist im Strahlengang bzw. in der optischen Achse 22 ein Umlenkspiegel 16 angeordnet.

Der Mikroskopkörper 13 weist ferner eine integrierte Kammer 6 zur Aufnahme von elektronischen Steuerschaltungen und/oder zur Aufnahme einer Strom/Spannungsversorgung für die Beleuchtungseinrichtung 7 auf.

Der Objekttisch 3 ist fest mit einem Tischwinkel 21 verbunden. Der Tischwinkel 21 ist in Doppelpfeilrichtung entlang der Führungen 17, die fest am Mikroskopkörper 13 angeordnet sind, zur Fokussierung des Mikroskopobjektivs 2 bewegbar ausgebildet. Der Tischwinkel 21 ist über zwei Schrauben 20 mit einem ersten Stab 8 fest verbunden. Dieser erste Stab 8 ist vorzugsweise aus Eisen gefertigt und über eine Schraubverbindung 18 mit einem zweiten Stab 9, der vorzugsweise aus Aluminium gefertigt ist, verbunden. An dem zweiten Stab 9 ist eine Zahnstange 4 über zwei Schrauben 19 befestigt. Die Zahnstange 4 steht im Eingriff mit einem Antriebszahnrad 5, welches über weitere nicht mit dargestellte getriebliche Mittel mit externen Bedienknöpfen und/oder einem motorischen Antrieb verbunden ist.

Die beiden Stäbe 8 und 9 sind gegen ein seitliches Verdrehen bzw. Verschieben durch eine Schraubverbindung 11 gesichert. Dazu ist in Längsrichtung im zweiten Stab 9 ein Langloch 12 vorgesehen, durch welches eine Schraube 11 geführt ist. Diese Schraube 11 ist im gegenüberliegenden ersten Stab 8 befestigt. Zur Verminderung der Reibung ist zwischen den beiden Stäben 8 und 9 ein Luftspalt 10 vorgesehen.

Eine Drehbewegung des Antriebszahnrads 5 wird über die Zahnstange 4, die beiden Stäbe 8 und 9 auf den Tischwinkel 21 mit dem Objekttisch 3 übertragen, so daß der Objekttisch 3 zur Fokussierung entlang der Objektivachse 22 in Doppelpfeilrichtung bewegt wird.

Bedingt durch die Wärmeentwicklung der elektronischen Bauteile 6 und der Beleuchtungseinrichtung 7 erfolgt mit zunehmenden Betriebsdauer des Mikroskops 1 eine Erwärmung des Mikroskopkörpers 13 und somit eine entsprechende Ausdehnung. Diese Ausdehnung hat zur Folge, daß sich der Abstand ΔL zwischen dem Mikroskoprevolver 15 und dem Objekttisch 3 vergrößert. Durch die äußerst geringen Tiefenschärfebereiche der Mikroskopobjektive 2 (im µ Bereich) geht bei dieser Abstandsänderung der eingestellte Fokus verloren.

Zur Kompensation dieser Abstandsänderung ist der Mikroskoptisch 3 mit den beiden Stäben 8 und 9 verbunden. Durch die unterschiedlichen Wärmeausdehnungskoeffizienten der verwendeten Stabmaterialien, erster Stab 8 aus Eisen (Wärmeausdehnungskoeffizient 10⁻⁶*12,1) und zweiter Stab 9 aus Aluminium (Wärmeausdehnungskoeffizient 10 ⁻⁶* 23,8) erfolgt eine Nachführung des Objekttisches 3 in Abhängigkeit von der Temperatur.

Im vorliegenden Ausführungsbeispiel dehnt sich bei Erwärmung der erste Stab 8 in Pfeilrichtung 23 aus, da der zweite Stab 9 über die Zahnstange 4 und das Antriebsritzel 5 fixiert ist. Gleichzeitig erfolgt eine Ausdehnung des zweiten Stabes 9. Durch die unterschiedlichen Ausdehnungskoeffizienten der beiden Stäbe 8, 9 ist, bei gleicher Baulänge, der Betrag der Ausdehnung des Stabes 9 größer als der des Stabes 8. Die Differenz der beiden Beträge ergibt eine Anhebung des Objekttisches 3 in Richtung des Mikroskopobjektivs 2. Dieser Betrag kann dadurch variiert werden, daß für die beiden Stäbe 8, 9 unterschiedliche Baulängen gewählt werden.

Durch eine entsprechende Wahl der Baulängen der einzelnen Stäbe 8 bzw. 9 und/oder durch die Verwendung von anderen Materialien entsprechenden Wärmeausdehnungskoeffizienten läßt sich eine individuelle, auf die diversen Mikroskopkörperformen und -größen angepaßte Kompensation der Defokussierung erreichen.

### Bezugszeichenliste

- 1 -: Mikroskop
- 2 -: Mikroskopobjektiv
- 3 -: Objekttisch
- 4 -: Zahnstange
- 5 -: Antriebszahnrad
- 6 -: integrierte elektronische Bauteile
- 7 -: Beleuchtungseinrichtung
- 8 -: erster Stab
- 9 -: zweiter Stab
- 10-: Luftspalt
- 11 -: Schraube
- 12 -: Langloch
- 13 -: Mikroskopkörper
- 14 -: Binotubus
- 15 -: Objektivrevolver
- 16 -: Umlenkspiegel
- 17 -: Führung für 3
- 18 -: Schraube
- 19 -: Schrauben
- 20 -: Schrauben
- 21 -: Tischwinkel
- 22 -: Objektivachse
- 23 -: Pfeilrichtung

## Patentansprüche

1. Mikroskop (1) mit einem Objektiv (2) und einem Objekttisch (3), der zur Fokussierung durch ein Antriebszahnrad (5) und eine Zahnstange (4) in Richtung des Objektivs (2) entlang der Objektivachse (22) höhenverstellbar ausgebildet ist, und mit einem Mikroskopkörper (13), in dem elektrische Bausteine (6) und/oder Komponenten für eine Objektbeleuchtung angeordnet sind, die beim Betrieb Wärme erzeugen und durch die Wärme eine Ausdehnung des Mikroskops (1) stattfindet und damit eine Defokussierung durch eine Höhenverschiebung des Objekttisches (3) relativ zum Objektiv (3) erfolgt, **dadurch gekennzeichnet, dass** zur Kompensation der wärmebedingten Defokussierung zwischen der Zahnstange (4) und dem Objekttisch (3) mindestens zwei Stäbe (8, 9) mit unterschiedlicher Wärmeausdehnung zwischengeschaltet sind, von denen der zweite Stab (9) mit seinem einen Ende mit der Zahnstange (4) und mit seinem anderen Ende mit dem ersten Stab (8) verbunden ist und von denen der erste Stab (8) mit seinem freien Ende den Objekttisch (3) trägt und in seiner Wärmeausdehnung der Wärmeausdehnung des zweiten Stabes (9) entgegenarbeitet, so dass infolge der unterschiedlichen Wärmeausdehnungen der beiden Stäbe (8, 9) der Objekttisch (3) in seiner Höhe temperaturabhängig nachgeführt wird.

2. Mikroskop (1) mit einem Objektiv (2) nach Anspruch 1, **dadurch gekennzeichnet, dass** der erste (8) und der zweite Stab (9) nebeneinander angeordnet und parallel zu der Zahnstange (4) ausgerichtet sind.

3. Mikroskop (1) mit einem Objektiv (2) nach Anspruch 1 oder 2, **dadurch gekennzeichnet, dass** der zweite Stab (9) ein größeres Wärmeausdehnungsvermögen besitzt als der erste Stab (8).

4. Mikroskop (1) mit einem Objektiv (2) nach Anspruch 1 bis 3, **dadurch gekennzeichnet, dass** zur Verminderung der Reibung der beiden Stäbe (8, 9) aneinander, die beiden Stäbe (8, 9) voneinander beabstandet sind.

5. Mikroskop (1) mit einem Objektiv (2) nach Anspruch 1 bis 4, **dadurch gekennzeichnet, dass** der zweite Stab (9) aus Aluminium und der erste Stab (8) aus Eisen gefertigt ist.

6. Mikroskop (1) mit einem Objektiv (2) nach Anspruch 1 bis 5, **dadurch gekennzeichnet, dass** zur seitlichen Führung der beiden Stäbe (8, 9) aneinander der eine der beiden Stäbe (9) an seinem freien Ende eine Schraube (11) trägt und der andere der beiden Stäbe (8) ein Langloch (12) aufweist, in das die Schraube (11) eingreift.

7. Mikroskop (1) mit einem Objektiv (2) nach Anspruch 1 bis 6, **dadurch gekennzeichnet, dass** die Längen der beiden Stäbe (8, 9) unterschiedlich dimensioniert sind.

## Claims

1. Microscope (1) having an objective (2) and an object stage (3) which is of height-adjustable design in the direction of the objective (2) along the objective axis (22) for the purpose of focusing by means of a toothed drive wheel (5) and a rack (4), and having a microscope body (13) in which there are arranged for object illumination electric modules (6) and/or components which generate heat during operation, and an expansion of the microscope (1) takes place owing to the heat, and defocusing thereby occurs owing to a height displacement of the object stage (3) relative to the objective (2), **characterized in that** there are inserted between the rack (4) and the object stage (3) for the purpose of compensating the thermally induced defocusing two bars (8, 9) of different thermal expansion and of which the second bar (9) is connected with one end to the rack (4) and with its other end to the first bar (8), and on which the first bar (8) supports the object stage (3) with its free end and counteracts with its thermal expansion the thermal expansion of the second bar (9) such that as a consequence of the different thermal expansions of the two bars (8, 9) the height of the object stage (3) is tracked as a function of temperature.

2. Microscope (1) having an objective (2) according to Claim 1, **characterized in that** the first (8) and the second bar (9) are arranged next to one another and parallel to the rack (4).

3. Microscope (1) having an objective (2) according to Claim 1 or 2, **characterized in that** the second bar (9) has a larger thermal expansion capacity than the first bar (8).

4. Microscope (1) having an objective (2) according to Claims 1 to 3, **characterized in that** the two bars (8, 9) are spaced apart from one another in order to reduce the friction of the two bars (8, 9) against one another.

5. Microscope (1) having an objective (2) according to Claims 1 to 4, **characterized in that** the second bar (9) is produced from aluminium, and the first bar (8) is produced from iron.

6. Microscope (1) having an objective (2) according to Claims 1 to 5, **characterized in that** for the purpose of lateral guidance of the two bars (8, 9) on one another, one of the two bars (9) supports at its free end a screw (11), and the other one of the two bars (8) has an elongated hole (12) in which the screw (11) engages.

7. Microscope (1) having an objective (2) according to Claims 1 to 6, **characterized in that** the lengths of the two bars (8, 9) are of different dimensions.

## Revendications

1. Microscope (1) comprenant un objectif (2) et une platine porte-objet (3) qui est ajustable en hauteur dans la direction de l'objectif (2) suivant l'axe (22) de l'objectif, pour réglage de la distance focale, par un pignon de commande (5) et une crémaillère (4), ainsi qu'un bâti de microscope (13) dans lequel sont placés des modules (6) et/ou composants électriques servant à illuminer l'objet et qui dégagent de la chaleur en cours d'utilisation, une dilatation du microscope (1) se produisant sous l'effet de la chaleur et donc un déréglage de la distance focale par déplacement de la platine porte-objet (3) en hauteur par rapport à l'objectif (2), **caractérisé en ce que** pour compenser le déréglage de la distance focale sous l'effet de la chaleur, on intercale entre la crémaillère (4) et la platine porte-objet (3) au moins deux barres (8, 9) à dilatation thermique différente, desquelles la seconde barre (9) est raccordée, par sa première extrémité, à la crémaillère (4), et, par son autre extrémité, à la première barre (8), et desquelles la première barre (8) porte, par son extrémité libre, la platine porte-objet (3) et s'oppose, par sa dilatation thermique, à la dilatation thermique de la seconde barre (9), de sorte que suite aux dilatations thermiques différentes des deux barres (8, 9), la platine porte-objet (3) est rattrapée en hauteur en fonction de la température.

2. Microscope (1) comprenant un objectif (2) selon la revendication 1, **caractérisé en ce que** la première barre (8) et la seconde barre (9) sont disposées l'une à côté de l'autre et orientées parallèlement à la crémaillère (4).

3. Microscope (1) comprenant un objectif (2) selon la revendication 1 ou 2, **caractérisé en ce que** la seconde barre (9) possède un pouvoir de dilatation thermique plus grand que la première barre (8).

4. Microscope (1) comprenant un objectif (2) selon les revendications 1 à 3, **caractérisé en ce que** pour réduire le frottement des deux barres (8, 9) l'une sur l'autre, les deux barres (8, 9) sont espacées l'une de l'autre.

5. Microscope (1) comprenant un objectif (2) selon les revendications 1 à 4, **caractérisé en ce que** la seconde barre (9) est fabriquée en aluminium, et la première barre (8), en fer.

6. Microscope (1) comprenant un objectif (2) selon les revendications 1 à 5, **caractérisé en ce que** pour guider latéralement les deux barres (8, 9) l'une sur l'autre, l'une des deux barres (9) porte une vis (11) à son extrémité libre, et l'autre des deux barres (8) présente un trou longitudinal (12) dans lequel s'engage la vis (11).

7. Microscope (1) comprenant un objectif (2) selon les revendications 1 à 6, **caractérisé en ce que** les longueurs des deux barres (8, 9) sont de dimensions différentes.
